# FASCICULE DE BREVET EUROPEEN

(11) **EP 0 931 682 B1**
(45) Date de publication et mention de la délivrance du brevet: **06.11.2002**
(21) Numéro de dépôt: 99460008.8
(22) Date de dépôt: 27.01.1999
(51) Int. Cl.: B60J 1/20

(54) **Store à enrouler à boîtier flexible**
Fensterrollo mit einem biegsamen Gehäuse
Roller blind with a flexible enclosure

(30) Priorité: 27.01.1998 FR 9801112
(43) Date de publication de la demande: 28.07.1999
(73) Titulaire: Wagon Automotive, 79302 Bressuire Cédex (FR)
(72) Inventeur: Jilcheleau, Michel, 79320 Moncoutant (FR)
(74) Mandataire: Vidon, Patrice

(56) Documents cités:
- EP-A- 0 394 123
- EP-A- 0 834 414
- DE-A- 4 041 341
- FR-A- 1 256 135
- FR-A- 1 405 949

## Description

Le domaine de l'invention est celui des stores à enrouleur. Plus précisément, l'invention concerne les stores à enrouleur destinés à être mis en place sur un support présentant un contour non rectiligne, tel qu'un élément de structure d'une porte d'un véhicule automobile (cf. par exemple US-A-5 024 479, correspondant au préambule de la revendication principale).

Des stores à enrouleur sont connus depuis longtemps, notamment dans le domaine des véhicules automobiles. Ils peuvent également trouver des applications dans d'autres domaines, tels que celui de l'occultation de vitres de tout type de véhicules, ou de vitres de bâtiments.

Classiquement, un tel store comprend une toile d'occultation dont l'un des bords est fixé à un rouleau enrouleur, et dont le bord opposé est équipé de moyens de tirage, permettant à un utilisateur de déplier et de replier la toile d'occultation. Le rouleau à enrouleur est monté mobile en rotation autour de son axe dans un boîtier. Un couple de rappel permanent agit sur ce rouleau, de façon à enrouler la toile sur ce dernier, dès qu'elle n'est plus maintenue en position déployée.

Dans certaines situations, et notamment lorsque l'élément de structure destiné à supporter le boîtier du store n'est pas rectiligne et/ou lorsque la baie à occulter est galbée, l'utilisation des stores rectilignes classiques est à la fois peu aisée et inesthétique.

Tout d'abord, le positionnement exact du store est difficile, et plus encore sa fixation sur l'élément de structure.

Par ailleurs, lorsque le boîtier du store est en place, il reste un jour plus ou moins important entre celui-ci et l'élément de structure sur lequel il est appliqué. Outre l'aspect peu esthétique de ce jour, cela présente l'inconvénient que la poussière et divers petits objets peuvent se loger dans cet espace.

De plus, dans certaines situations, et notamment lorsque la baie à occulter est une vitre d'automobile qui peut être ouverte, ce jour peut entraîner des bruits de circulation d'air intempestifs.

Une solution à ce problème, présentée par exemple dans ledit document de brevet US-5 024 479, consiste à préformer le store à enrouleur et notamment son boîtier de façon qu'il présente un profil coïncidant avec celui de l'élément de structure sur lequel il est destiné à être appliqué.

Cette technique pallie effectivement les inconvénients listés ci-dessus. Cependant, elle s'avère coûteuse et techniquement complexe à mettre en oeuvre.

En effet, les moyens de conception et de production d'un tel store galbé sont spécifiques, et plus coûteux que ceux mis en oeuvre pour la réalisation des stores classiques. La fabrication de pièces galbées selon un profil prédéterminé est en effet moins aisée. Par ailleurs, le stockage de tels stores est peu aisé, et nécessite des moyens d'emballage et de maintien spécifiques et relativement encombrants.

Enfin, cette technique suppose que les pièces soient parfaitement ajustées, et donc notamment que le profil de l'élément de structure sur lequel doit être installé le store soit parfaitement défini et invariable d'un élément de structure à l'autre. Dans le cas contraire, les problèmes liés à la présence d'un jour subsistent.

L'invention a notamment pour objectif de pallier ces différents inconvénients de l'état de l'art.

Plus précisément, un premier objectif de l'invention est de fournir un store à enrouleur pouvant s'adapter précisément à la forme d'un élément de structure, sans laisser le moindre jour entre eux, même dans l'hypothèse où le profil de l'élément de structure n'est pas connu avec précision, où dans le cas ou celui-ci peut légèrement varier.

L'invention a également pour objectif de fournir un tel store à enrouleur, qui puisse être mis en oeuvre sur plusieurs types d'éléments de structure, et par exemple sur des portières de différents véhicules, sans nécessiter d'adaptation particulière.

Un autre objectif de l'invention est de fournir un tel store à enrouleur qui soit simple et peu coûteux à fabriquer et à stocker.

Encore un autre objectif de l'invention est de fournir un tel store à enrouleur, qui puisse être aisément monté et démonté sur un élément de structure, sans détérioration de ce dernier. Notamment, l'invention a pour objectif de fournir un tel store, qui ne nécessite pas l'intervention d'un professionnel, ni l'utilisation d'un outillage particulier pour son installation.

Ces objectifs, ainsi que d'autres qui apparaîtront par la suite, sont atteints selon l'invention à l'aide d'un store à enrouleur, du type comprenant un écran d'occultation enroulable sur un rouleau d'enroulement monté dans un boîtier, ledit boîtier étant flexible, de façon qu'il puisse prendre au moins deux positions :
- une position de repos, dans laquelle ledit boîtier est essentiellement rectiligne, et
- une position de travail, dans laquelle ledit boîtier est mis en place, à force, le long d'un élément de structure non rectiligne dont il épouse la forme.

Ainsi, la fabrication du store est aisé, et même classique, à l'exception du choix des matériaux adéquats. De même, le stockage ne pose pas de problème. Par ailleurs, la mise en place à force permet de garantir l'absence de jour entre le boîtier et l'élément de structure.

Enfin, un tel store peut être mis en place sur plusieurs types d'éléments de structure, dès lors que les dimensions du store permettent d'assurer l'occultation voulue.

De façon avantageuse, ledit rouleau d'enroulement est également flexible.

Selon un mode de réalisation préférentiel de l'invention, le store est maintenu en place le long dudit élément de structure à l'aide d'au moins un crochet de fixation amovible.

Avantageusement, ledit crochet de fixation présente une première extrémité prévue pour maintenir ledit boîtier par clippage, et une seconde extrémité prévue pour s'accrocher à un point de retenue dudit élément de structure.

Ainsi, le maintien en position de travail est simple et efficace. Le store peut être aisément démonté et remonté en tant que de besoin. Dans la plupart des cas, un unique crochet s'avère suffisant.

Dans le cas où le store peut être utilisé sur plusieurs types d'éléments de structure, on peut prévoir différents types de crochets, correspondants à chacun des éléments de structure.

De façon préférentielle, ledit crochet est au moins partiellement recouvert d'un matériau de protection, prévu pour ne pas endommager une vitre avec laquelle ledit crochet peut être en contact.

Selon un autre mode de réalisation, ledit crochet est réalisé en une seule pièce d'un matériau de protection, permettant de ne pas endommager une vitre avec laquelle ledit crochet peut être en contact.

Avantageusement, ledit rouleau d'enroulement est monté avec jeu dans ledit boîtier. Ledit rouleau d'enroulement peut être monté libre en rotation sur une barre d'armature fixe, ou sur deux paliers d'extrémité.

D'autres caractéristiques et avantages de l'invention apparaîtront plus clairement à la lecture de la description suivante d'un mode de réalisation préférentiel de l'invention, donné à titre de simple exemple illustratif et non limitatif et des dessins annexés, parmi lesquels :
- la figure 1 présente un store à enrouleur selon l'invention en position de repos (boîtier rectiligne) ;
- la figure 2 présente le store de la figure 1 en position de travail, lorsqu'il est appliqué contre un élément de structure, en l'occurrence la porte d'un véhicule automobile ;
- la figure 3 illustre un mode de fixation du store de la figure 2, à l'aide d'un crochet de fixation ;
- la figure 4 est une vue en coupe du boîtier de la figure 1, selon la ligne I-I.

Comme mentionné plus haut, les stores selon l'invention sont réalisés dans un matériau flexible, présentant une capacité de déformation élastique idoine, par exemple en plastique, de façon qu'ils puissent être mis en place sur un support non rectiligne.

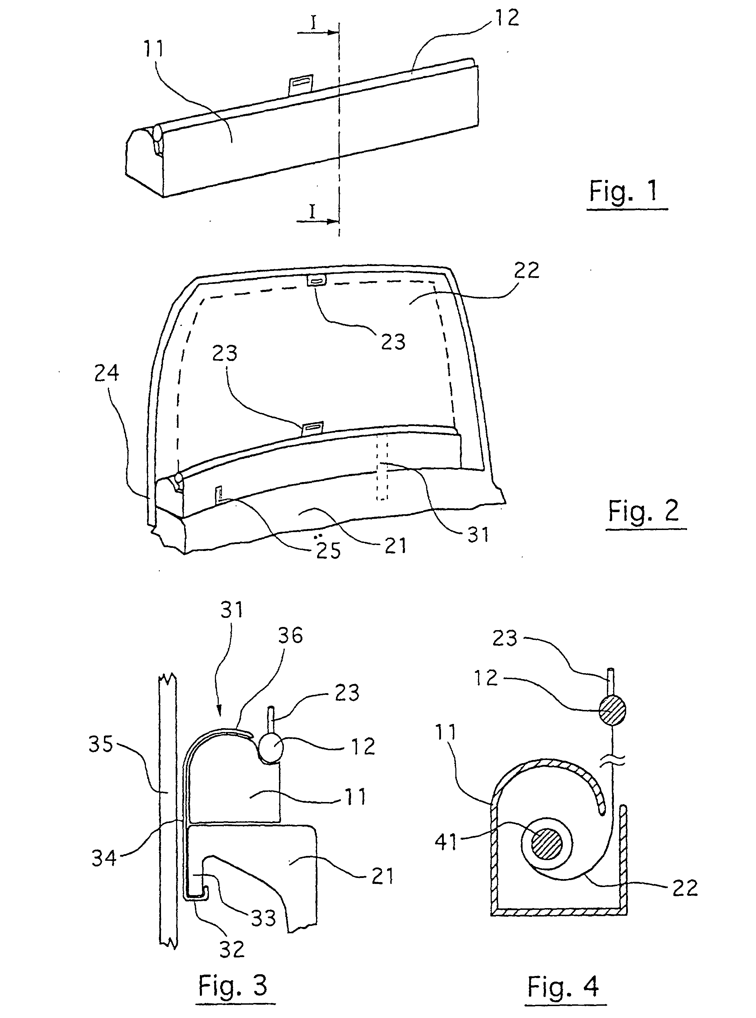

La figure 1 illustre un tel store, en position de repos. Dans cette position, il est rectiligne, et ne présente donc aucune différence particulière par rapport à un store classique, si ce n'est que ce dernier présente un boîtier rigide (en aluminium par exemple).

Il comprend donc un boîtier 11, présentant une fente par laquelle un écran souple, par exemple une toile, peut être déroulé. L'extrémité de cet écran est maintenu par une barre de tirage 12, qui s'appuie, sous l'effet d'une force de rappel, sur la fente du boîtier.

Le store de la figure 1 est prévu pour occulter une vitre d'une portière d'un véhicule automobile. Il est donc monté ainsi que cela est illustré en figure 2, sur le bord 21 de la garniture d'une portière. En position déployée (22), cet écran peut par exemple être maintenu par un crochet 23 solidaire de la partie supérieure de la portière.

Comme le matériau du boîtier 11 est flexible, ou déformable, ce dernier peut être plaqué, à force, le long du bord 21. Ainsi, il ne subsiste aucun jour entre ce bord et le fond du boîtier. Il est à noter que la déformation peut s'effectuer selon tous les axes, dans les limites bien sûr permettant le déroulement de l'écran. Il est toutefois souhaitable que la section du boîtier reste aussi rigide que possible.

Du fait que le boîtier 11 est flexible, on comprend qu'il reprend automatiquement sa position de repos de la figure 1, et qu'il peut donc aisément être stocké. Par ailleurs, on comprend qu'il s'ajuste précisément au profil de l'élément de structure, même si celui-ci est légèrement variable.

Une technique de fixation avantageuse, qui permet d'effectuer aisément des montages et des démontages sans détérioration ni du boîtier, ni de son support, et qui assure un bon maintien en position de travail, est l'utilisation d'un ou plusieurs crochets, ainsi que cela est illustré en figure 3.

Ce crochet 31 vient s'accrocher, à une première extrémité 32, à un point de retenue 33 de la portière. Le corps 34 du crochet circule entre ce point de retenue 33 et la vitre 35 de la portière. La seconde extrémité 36 du crochet vient quant à elle maintenir le boîtier 11 (vu de côté) par clippage.

De façon à ne pas rayer cette vitre 35, le crochet 31 est au moins en partie recouvert d'un revêtement de protection. Le crochet 31 peut également être réalisé en un matériau qui présente à la fois les qualités d'élasticité requises pour maintenir le boîtier et de protection de l'intégrité de la vitre.

La mise en place du store peut alors s'effectuer de la façon suivante :
- on place le boîtier 11, en position de repos, contre l'élément de structure 21 ;
- on l'amène en butée contre l'un des bords 24 du châssis de la baie (l'élément de verrouillage 25 de la portière pouvant maintenir provisoirement le boîtier) ;
- mise en place de l'extrémité d'accrochage 32 du crochet 31 ;
- clippage de l'extrémité 36 du crochet 31 sur le boîtier 11.

Le démontage s'effectue de façon symétrique.

Dans la plupart des cas, il semble qu'un seul crochet 31 soit suffisant. Il est clair toutefois que plusieurs crochets peuvent également être utilisés, en cas de besoin.

Préférentiellement, la plupart des éléments constitutifs du store (notamment le rouleau d'enroulement) sont également flexibles, afin qu'ils suivent le mouvement appliqué au boîtier.

La figure 4 présente le boîtier de la figure 1, en coupe, au niveau de la ligne I-I. Le rouleau d'entrainement 41 est une barre flexible, réalisée par exemple dans un matière plastique possédant une bonne capacité de déformation élastique. Elle est maintenue à ces deux extrémités, libre en rotation. Elle peut ainsi tournée autour de son axe, qui est approximativement parallèle à l'axe du boîtier 11.

Comme déjà indiqué, l'écran souple d'occultation 12 est fixé, à l'un de ses bords, à la barre de tirage 12. L'autre de ces bords est fixé à la barre au rouleau d'enroulement 41.

Des moyens de rappels sont prévus, pour exercer un couple de rappels permanents du rouleau d'enroulement 41, tendant à enrouler l'écran 22 autour de celui-ci. Ces moyens de rappels peuvent par exemple être formés par un ou plusieurs ressorts de rappel disposés à l'intérieur de paliers dans lesquels sont maintenus les extrémités du rouleau 41. La présence de tels paliers permet par ailleurs de forcer le rouleau 41 à prendre une courbure similaire à celle appliquée au boîtier 11.

Selon un autre mode de réalisation, le rouleau 41 peut être monté libre en rotation sur une barre d'armature fixe.

Le rouleau d'enroulement 41 peut donc tourner à l'intérieur du boîtier 11, avec un jeu léger. Ainsi, le rouleau 41 (avec l'écran 22 enroulé) peut venir en appui contre la face interne du boîtier.

La présente invention n'est bien sûr pas limitée au mode de réalisation qui vient d'être décrit. Au contraire, de nombreuses variantes peuvent être envisagées, notamment par :
- les moyens de fixation mis en oeuvre, qui peuvent être amovibles ou non ;
- la forme (section notamment) du boîtier ;
- les moyens d'enroulement mis en oeuvre à l'intérieur du boîtier ;
- l'utilisation et la mise en place du boîtier (le store pouvant être déployé vers le haut, vers le bas, latéralement,...) ;
- l'utilisation de moyens d'entrainement du store motorisé ;
- l'utilisation d'un rouleau d'enroulement rigide.

## Revendications

1. Store à enrouleur, du type comprenant un écran d'occultation enroulable (22) sur un rouleau d'enroulement (41) monté dans un boîtier (11),
**caractérisé en ce que** ledit boîtier (11) est flexible, de façon qu'il puisse prendre au moins deux positions :
- une position de repos, dans laquelle ledit boîtier (11) est essentiellement rectiligne, et
- une position de travail, dans laquelle ledit boîtier (11) est mis en place, à force, le long d'un élément de structure (21) non rectiligne dont il épouse la forme.

2. Store à enrouleur selon la revendication 1, **caractérisé en ce que** ledit rouleau d'enroulement (41) est également flexible.

3. Store à enrouleur selon l'une quelconque des revendications 1 et 2, **caractérisé en ce qu'**il est maintenu en place le long dudit élément de structure (21) à l'aide d'au moins un crochet de fixation (31) amovible.

4. Store à enrouleur selon la revendication 3, **caractérisé en ce que** ledit crochet de fixation (31) présente une première extrémité (36) prévue pour maintenir ledit boîtier par clippage, et une seconde extrémité (32) prévue pour s'accrocher à un point de retenue (33) dudit élément de structure (21).

5. Store à enrouleur selon l'une quelconque des revendications 3 et 4, **caractérisé en ce que** ledit crochet (31) est au moins partiellement recouvert d'un matériau de protection, prévu pour ne pas endommager une vitre (35) avec laquelle ledit crochet (31) peut être en contact.

6. Store à enrouleur selon l'une quelconque des revendications 3 et 4, **caractérisé en ce que** ledit crochet (31) est réalisé en une seule pièce d'un matériau de protection, permettant de ne pas endommager une vitre (35) avec laquelle ledit crochet (31) peut être en contact.

7. Store à enrouleur selon l'une quelconque des revendications 1 à 6, **caractérisé en ce que** ledit rouleau d'entrainement (41) est monté avec jeu dans ledit boîtier (11).

8. Store à enrouleur selon l'une quelconque des revendications 1 à 7, **caractérisé en ce qu'**il comprend une barre d'armature fixe, sur laquelle ledit rouleau d'enroulement (41) est monté libre en rotation.

9. Store à enrouleur selon l'une quelconque des revendications 1 à 7, **caractérisé en ce qu'**il comprend deux paliers d'extrémité, sur lesquels ledit rouleau d'enroulement (41) est monté libre en rotation.

## Patentansprüche

1. Fensterrollo von der Art, die einen Verdunkelungsbehang (22) umfasst, welcher auf eine in einem Gehäuse (11) eingebaute Welle (41) aufrollbar ist,
**dadurch gekennzeichnet, dass** das Gehäuse (11) biegsam ist, so dass es mindestens zwei Stellungen einnehmen kann:
- eine Ruhestellung, in der das Gehäuse (11) im wesentlichen geradlinig ist, und
- eine Arbeitsstellung in der das Gehäuse (11) zwangsweise der Form eines nicht geradlinigen Strukturelementes (21) angepasst ist und dessen Form annimmt.

2. Fensterrollo nach Anspruch 1,
**dadurch gekennzeichnet, dass** die Welle (41) ebenfalls biegsam ist.

3. Fensterrollo nach einem der Ansprüche 1 oder 2,
**dadurch gekennzeichnet, dass** es mittels mindestens eines lösbaren Befestigungshakens (31) an das Strukturelement (21) gehalten wird.

4. Fensterrollo nach Anspruch 3,
**dadurch gekennzeichnet**, das der Befestigungshaken (31) ein erstes Ende (36) aufweist, welches zum Festklemmen des Gehäuses durch Einrasten ausgebildet ist sowie ein zweites Ende (32), dessen Form das Einhängen an einem Befestigungspunkt (33) des Strukturelementes (21) zulässt.

5. Fensterrollo nach einem der Ansprüche 3 oder 4,
**dadurch gekennzeichnet, dass** der Haken (31) zumindest teilweise mit einer Schutzhülle umgeben ist, die das Beschädigen einer möglicherweise vom Haken (31) berührten Fensterscheibe (35) vermeidet.

6. Fensterrollo nach einem der Ansprüche 3 oder 4,
**dadurch gekennzeichnet, dass** der Haken (31) aus einem einzigen aus Schutzmaterial bestehendem Teil, hergestellt ist, um das Beschädigen einer möglicherweise vom Haken (31) berührten Fensterscheibe (35) zu vermeiden.

7. Fensterrollo nach einem der Ansprüche 1 bis 6,
**dadurch gekennzeichnet, dass** die Welle (41) mit Spiel in das Gehäuse (11) eingebaut ist.

8. Fensterrollo nach einem der Ansprüche 1 bis 7,
**dadurch gekennzeichnet, dass** es eine feststehende Armierungsstange umfasst, auf der die Welle (41) so aufgesteckt ist, dass sie sich frei drehen kann.

9. Fensterrollo nach einem der Ansprüche 1 bis 7,
**dadurch gekennzeichnet, dass** es zwei Lager an den Enden aufweist, in denen die Welle (41) frei drehbar montiert ist.

## Claims

1. Roller blind of the type comprising a concealing screen which can be wound (22) onto a winding roller (41) mounted in a casing (11),
**characterised in that** the said casing (11) is flexible so as to be capable of assuming at least two positions:
- a rest position, in which the said casing (11) is essentially rectilinear, and
- a working position, in which the said casing (11) is forcibly placed in position along a non-rectilinear structural element (21) whose shape it adopts.

2. Roller blind in accordance with claim 1, **characterised in that** the said winding roller (41) is also flexible.

3. Roller blind in accordance with any one of claims 1 and 2, **characterised in that** it is held in position along the said structural element (21) with the help of at least one removable fixing hook (31).

4. Roller blind in accordance with claim 3, **characterised in that** the said fixing hook (31) has a first end (36) designed to hold the said casing by clipping, and a second end (32) designed to fasten onto a retaining point (33) on the said structural element (21).

5. Roller blind in accordance with any one of claims 3 and 4, **characterised in that** the said hook (31) is at least partially covered with a protective material designed not to damage a window (35) with which the said hook (31) may be in contact.

6. Roller blind in accordance with any one of claims 3 and 4, **characterised in that** the said hook (31) is manufactured, as a single part, from a protective material, which makes it possible not to damage a window (35) with which the said hook (31) may be in contact.

7. Roller blind in accordance with any one of claims 1 to 6, **characterised in that** the said driving roller (41) is mounted with play in the said casing (11).

8. Roller blind in accordance with any one of claims 1 to 7, **characterised in that** it comprises a fixed reinforcing bar, on which the said winding roller (41) is mounted in a freely rotating manner.

9. Roller blind in accordance with any one of claims 1 to 7, **characterised in that** it comprises two end bearings on which the said winding roller (41) is mounted in a freely rotating manner.
